# EUROPEAN PATENT SPECIFICATION

(11) **EP 3 964 645 B1**
(45) Date of publication and mention of the grant of the patent: **13.03.2024**
(21) Application number: 21192384.2
(22) Date of filing: 20.08.2021
(51) Int. Cl.: E01C 5/20

(54) **INTERLOCKING PAVING BRICK ASSEMBLY**
INEINANDERGREIFENDER PFLASTERSTEINVERBUND
ASSEMBLAGE DE BRIQUES DE PAVAGE À EMBOÎTEMENT

(30) Priority: 02.09.2020 TW 109130106
(43) Date of publication of application: 09.03.2022
(73) Proprietor: Jing Si Pureland Co., Ltd., Taipei City 106 (TW)
(72) Inventor: SIAO, Marshall Q., Hualien County 971 (TW)
(74) Representative: Yang, Shu

(56) References cited:
- EP-A1- 3 569 763
- WO-A1-2004/038104
- US-A1- 2017 218 639

## Description

### CROSS-REFERENCE TO RELATED APPLICATIONS

This application claims the benefit of Taiwan Patent Application No. 109130106 filed on September 2, 2020.

### FIELD

The present disclosure generally relates to an interlocking paving brick assembly.

More particularly, the present disclosure relates to a novel structure of the interlocking paving brick assembly as defined in the appended claims that facilitate fast and convenient assembly thereof.

### BACKGROUND

The laying of paving brick not only allows people to walk, but also allows vehicles to pass. The design of a traditional paving brick leads to a complicated laying process which comprises multiple steps such as base layer laying, base layer leveling, floor tile laying, floor tile caulking, and tile surface cleaning. Therefore, traditional paving brick is expansive to install, and the installation quality is hard to guarantee. At the same time, there are problems such as poor drainage and poor soil and water conservation.
EP3569763A1 discloses a linkage brick assembly, comprising: a least one first linkage brick, at least one second linkage brick and at least one third linkage brick, each linkage brick comprising a top face, a bottom face and four side faces between the top face and the bottom face. Each of the side faces of the first linkage brick forms a traverse engaging groove extending laterally. Each of two opposite side faces of the four side faces of the second linkage brick forms a traverse engaging protrusion extending laterally and each of the other two opposite side faces forms a vertical engaging portion extending vertically. Each of the side faces of the third linkage brick forms a vertical engaging groove extending vertically. Each of the traverse engaging grooves of the first linkage brick is used to engage with each of the traverse engaging protrusions of the second linkage brick through lateral sliding. Each of the vertical engaging grooves of the third linkage brick is used to engage with each of the vertical engaging protrusions of the second linkage brick through downward sliding. Due to the above structures, fast assembly of the linkage brick assembly of a large area can be achieved by means of the interlocking of only three types of linkage bricks.
WO2004038104A1 discloses a cluster of paving elements is formed with a peripheral edge having a re-entrant formation formed between the upper supporting surface and the lower, supported surface. The formation engages a complimentary formation on an adjacent cluster to inhibit relative movement between the clusters. The re-entrant formation may be applied to individual paving elements in the cluster or to the exposed faces of the elements at the periphery of the cluster. The elements in the cluster may be shaped to inter-engage to inhibit relative movement between the elements within the cluster.
US2017218639A1 discloses an outdoor flooring and a manufacturing method thereof, the outdoor flooring includes a metal core and a basal layer, the metal core is disposed within the basal layer, and the outdoor flooring has superior slip resistance and compression resistance, and has a small expansion coefficient. The invention is mainly used as a building material in outdoor public places, such as gardens, pavilions, lakes, seas and holiday villages.

### BRIEF DESCRIPTION OF THE DRAWINGS

Many aspects of the disclosure can be better understood with reference to the following drawings. The components in the drawings are not necessarily drawn to scale, the emphasis instead being placed upon clearly illustrating the principles of the disclosure. Moreover, in the drawings, like reference numerals designate corresponding parts throughout the several views.
Fig. 1 illustrates an isometric view of an interlocking paving brick assembly according to one embodiment of the present disclosure.
Fig. 2 illustrates an isometric view of a protruding brick according to one embodiment of the present disclosure.
Fig. 3 illustrates a top view of the protruding brick according to one embodiment of the present disclosure.
Fig. 4 illustrates a side view of the protruding brick according to one embodiment of the present disclosure.
Fig. 5 illustrates a bottom view of the protruding brick according to one embodiment of the present disclosure.
Fig. 6 illustrates another isometric view of the protruding brick according to one embodiment of the present disclosure.
Fig. 7 illustrates an isometric view of a recessing brick according to one embodiment of the present disclosure.
Fig. 8 illustrates a side view of the recessing brick according to one embodiment of the present disclosure.
Fig. 9 illustrates a A-A cross sectional view of the recessing brick according to one embodiment of the present disclosure.
Fig. 10 illustrates a B-B cross sectional view of the recessing brick according to one embodiment of the present disclosure.
Fig. 11 illustrates another isometric view of the recessing brick according to one embodiment of the present disclosure.
Fig. 12 illustrates an isometric view of a protruding brick and a recessing brick before assembly according to one embodiment of the present disclosure.
Fig. 13 illustrates a side view of the protruding brick and the recessing brick before assembly according to one embodiment of the present disclosure.
Fig. 14 illustrates a side view of the protruding brick and the recessing brick after assembly according to one embodiment of the present disclosure.
Fig. 15 illustrates an isometric view of multiple interlocking paving brick assembly according to one embodiment of the present disclosure.
Fig. 16 illustrates an isometric view of disassembling of multiple interlocking paving brick assembly according to one embodiment of the present disclosure.

### DETAILED DESCRIPTION

It will be appreciated that for simplicity and clarity of illustration, where appropriate, reference numerals have been repeated among the different figures to indicate corresponding or analogous elements. In addition, numerous specific details are set forth to provide a thorough understanding of the embodiments described herein. However, it will be understood by those of ordinary skill in the art that the embodiments described herein can be practiced without these specific details. In other instances, methods, procedures, and components have not been described in detail so as not to obscure the related relevant feature being described. Also, the description is not to be considered as limiting the scope of the embodiments described herein. The drawings are not necessarily to scale, and the proportions of certain parts may be exaggerated to better illustrate details and features of the present disclosure.

In regard to the term "couple" or "coupling" used throughout the disclosure, it can imply both direct and indirect connection. In regard to the term "comprise", it is defined as including but not limited to, thereby clearly indicating an open relationship of the described combinations, groups, and equivalents. In regard to the term "substantially", it is defined as having a deviation of plus/minus 2% from a measurement. In regard to the term "substantially parallel", it is defined as visually being about equidistant without assisting equipment (e.g. magnifier, microscope, measuring instrument). In regard to the term "substantially perpendicular", it is defined as visually being about right angle without assisting equipment (e.g. magnifier, microscope, measuring instrument). In regard to the term "substantially coplanar", it is defined as visually being about in the same plane without assisting equipment (e.g. magnifier, microscope, measuring instrument).

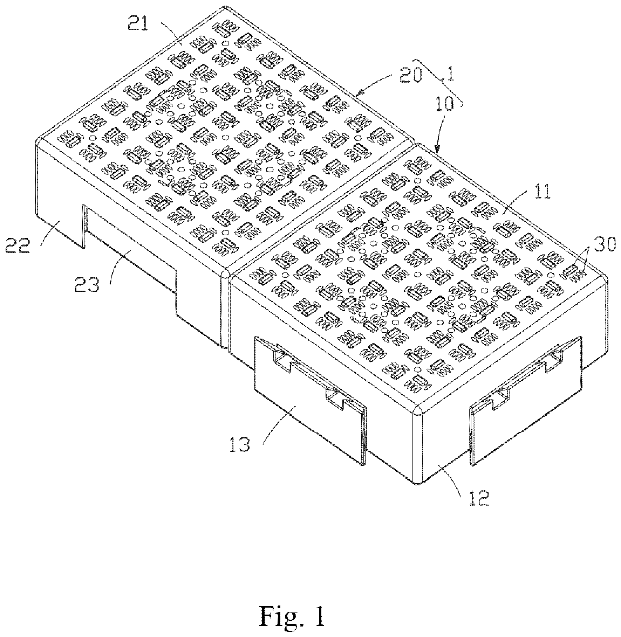

According to one embodiment of the present disclosure, Fig. 1 illustrates an interlocking paving brick assembly 1. The interlocking paving brick assembly 1 comprises a protruding brick 10 and a recessing brick 20. The protruding brick 10 is a block comprising a top portion 11 and four sidewalls 12 coupling to the top portions 11, and each angle between each of the sidewalls 12 and the top portion 11 is about 90 degrees. In addition, each of the sidewalls 12 comprises a tenon structure 13. The recessing brick 20 comprises a top portion 21 and four sidewalls 22 coupling to the top portions 21, and each angle between each of the sidewalls 22 and the top portion 21 is about 90 degrees. In addition, each of the sidewalls 12 comprises a mortise structure 23. The tenon structure 13 of the protruding brick 10 and the mortise structure 23 of the recessing brick 20 are structurally complementary to each other, so the protruding brick 10 can interlock with the recessing brick 20 via coupling of the tenon structure 13 and the mortise structure 23. Therefore, the protruding brick 10 and the recessing brick 20 can fit to each other closely and tightly in order to form the interlocking paving brick assembly 1. The interlocking paving brick assembly 1 further comprises a plurality of top anti-slip portion 30 arranged on the top surface of the protruding brick 10 and the recessing brick 20, thereby increasing friction between the interlocking paving brick assembly 1 and one that it bears on top thereof.

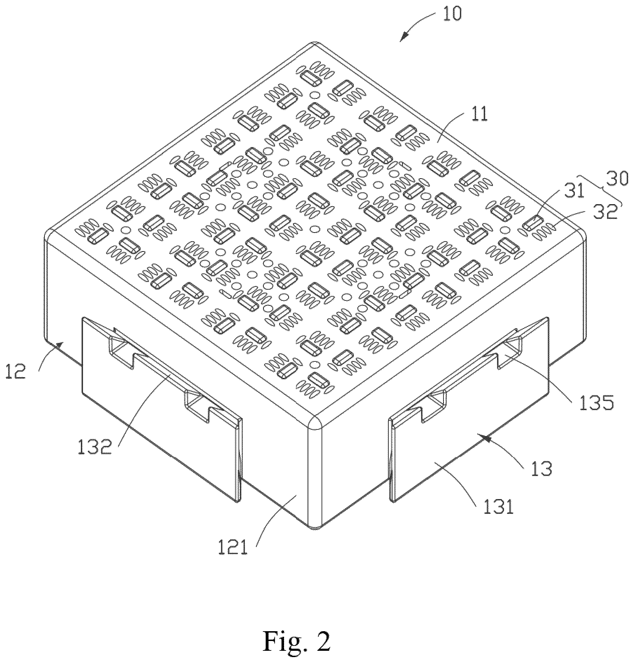

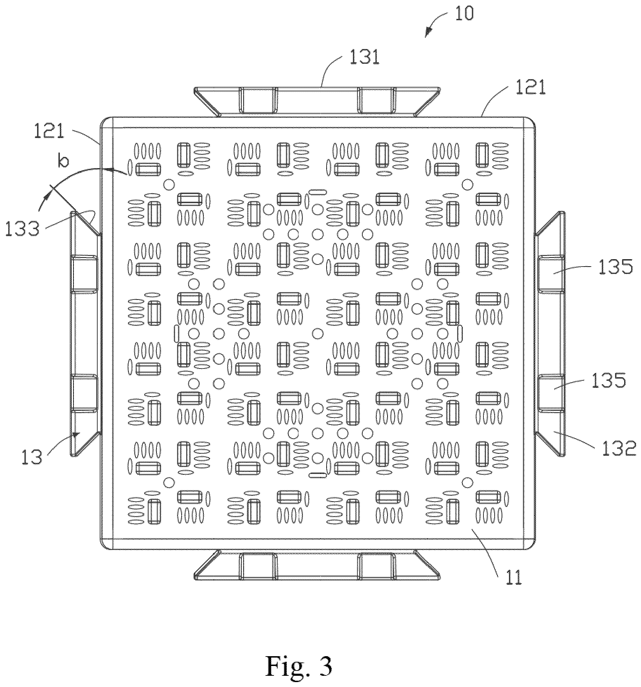

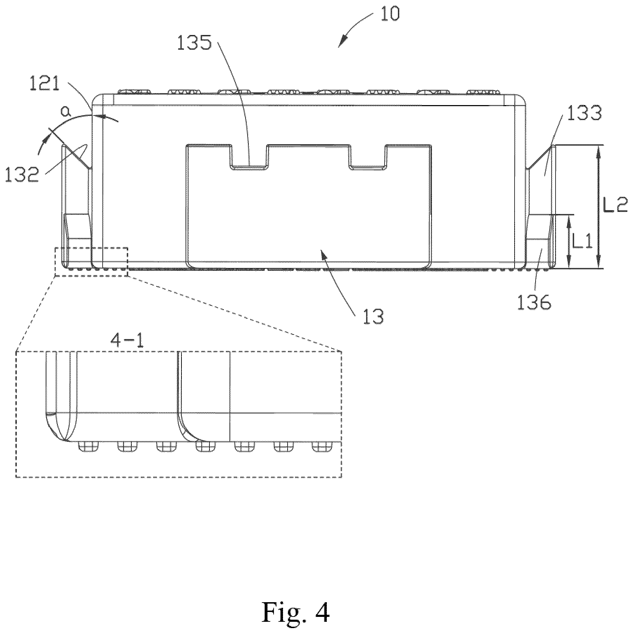

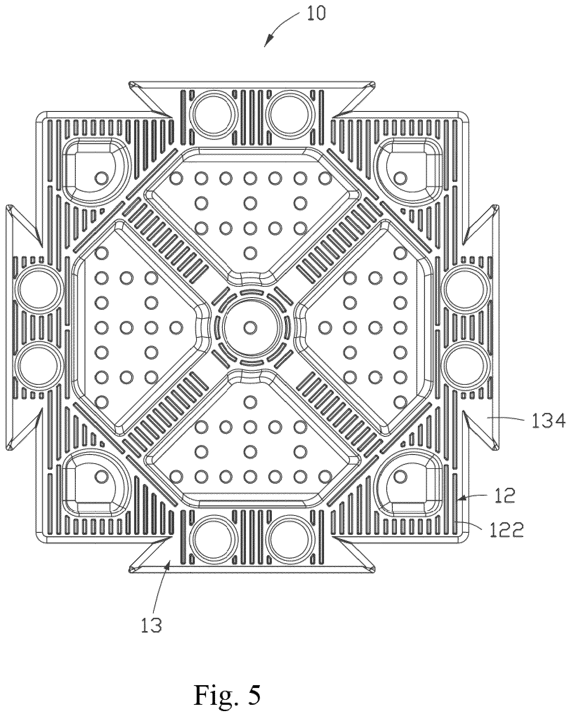

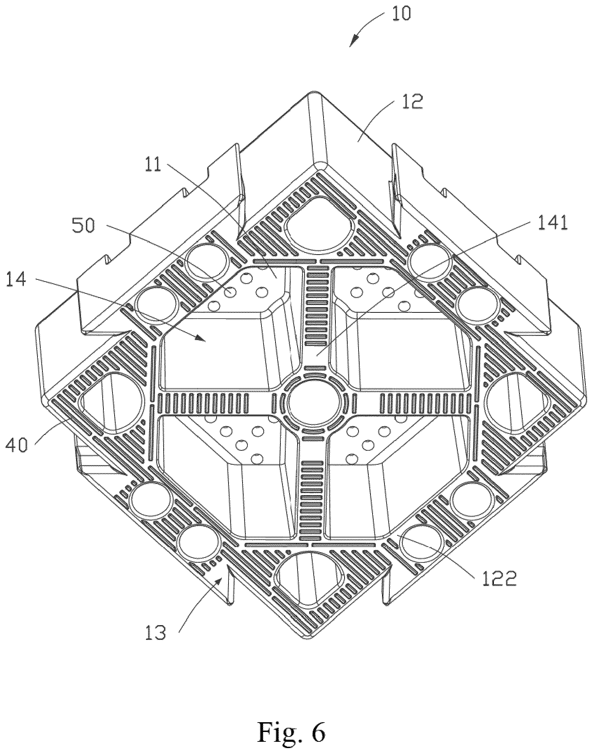

Referring to Fig. 2 to Fig. 6, a protruding brick 10 will be described according to one embodiment of the present disclosure. As shown in Fig. 2, the protruding brick 10 comprises a top portion 11 and four sidewalls 12. The top portion 11 comprises a plurality of top anti-slip portion 30. Each of the sidewalls 12 is coupled to the top portions 11, and each angle between each of the sidewalls 12 and the top portion 11 is about 90 degrees. In addition, each of the sidewalls 12 comprises a tenon structure 13. The tenon structure 13 has a tenon front surface 131, a top surface 132, two side surfaces 133 (refer to Fig. 4) and a tenon structure bottom surface 134 (refer to Fig. 5). The tenon front surface 131 is coupled to the top surface 132, the two side surfaces 133, and the tenon structure bottom surface 134; the top surface 132, the two side surfaces 133, and the tenon structure bottom surface 134 are coupled to a sidewall surface 121 of the sidewall 12. Therefore, the tenon structure 13 is defined as a protrusion on the sidewall surface 121 of the protruding brick 10. Using the sidewall surface 121 as a reference, the angle between the sidewall surface 121 and the top surface 132 is less than 90 degrees; each angle between the sidewall surface 121 and each side surface 133 is less than 90 degrees as well; the angle between the tenon structure bottom surface 134 and the sidewall surface 121 is about 90 degrees. As shown in Figure 3, the tenon front surface 131 is substantially parallel to the sidewall surface 121; as shown in Figures 3 and 5, the side surface 133 is substantially perpendicular to the top portion 11; as shown in Figure 5, the tenon structure bottom surface 134 and a sidewall bottom surface 122 of the sidewall 12 are substantially coplanar and coupled to each other to increase the contact area between the protruding brick 10 and the ground. As shown in Fig. 6, the protruding brick 10 further comprises a support structure 14 arranged between the four sidewalls 12 and coupled thereto. More specifically, the support structure 14 is an "X"-shaped structure between the four sidewalls 12. A support structure bottom surface 141 of the support structure 14 and the sidewall bottom surface 122 of the sidewall 12 are substantially coplanar and coupled to each other, and the support structure 14 is extended upwardly from the support structure bottom surface 141 to be coupled to the top portion 11. The support structure bottom surface 141 of the support structure 14 and the sidewall bottom surface 122 of the sidewall 12 are in contact with the ground, and the support structure 14 and the sidewall 12 are both coupled to the top portion 11. Therefore, the load-bearing capacity of the top portion 11, as well as the overall structural strength of the protruding brick 10, is strengthened by the support structure 14.

As shown in Fig. 2, in one embodiment of the present disclosure, the top portion 11 of the protruding brick 10 comprises a plurality of top anti-slip portion 30. The top anti-slip portion 30 comprises a first anti-slip structure 31 and a second anti-slip structure 32. In one embodiment of the present disclosure, the first anti-slip structure 31 and the second anti-slip structure 32 are protrusions formed on the up facing surface of the top portion 11. The number of the first anti-slip structure 31 is greater than that of the second anti-slip structure 32, and the volume of the first anti-slip structure 31 is larger than that of the second anti-slip structure 32. The top anti-slip portion 30 increases the friction between the protrusion brick 10 and the object that it bears, for example, preventing pedestrians from slipping and vehicles from skidding.

As shown in Fig. 6, in one embodiment of the present disclosure, the protruding brick 10 further comprises a plurality of drainage holes 50 provided on the top portion 11, and the drainage holes 50 penetrate through the top portion 11, so liquids such as rainwater can pass through the top portion 11 and reach below the protruding brick 10. In another embodiment of the present disclosure, the bottom surface of the protruding 10 is formed by coupling of the sidewall bottom surfaces 122 of the four sidewalls 12, the tenon structure bottom surface 134 of the tenon structure 13 and the support structure bottom surface 141 of the support structure 14. In addition, the protruding brick 10 also comprises a plurality of bottom anti-slip portion 40 provided on the bottom surface thereof. More specifically, the sidewall bottom surface 122, the tenon structure bottom surface 134, and the support structure bottom surface 141 each comprises a plurality of bottom anti-slip portions 40. The bottom anti-slip portions 40 are protrusions on the bottom surface of the protruding brick 10 and configured to increase the friction between the ground and the protruding brick 10, so that the relative position of the protruding brick 10 and the ground can be more stably maintained. Furthermore, since the bottom anti-slip portion 40 is a protruding structure, there is a gap between the protruding brick10 and the ground (see the partial enlargement 4-1 in Fig. 4), hence beneficial for liquid drainage of the protruding brick 10.

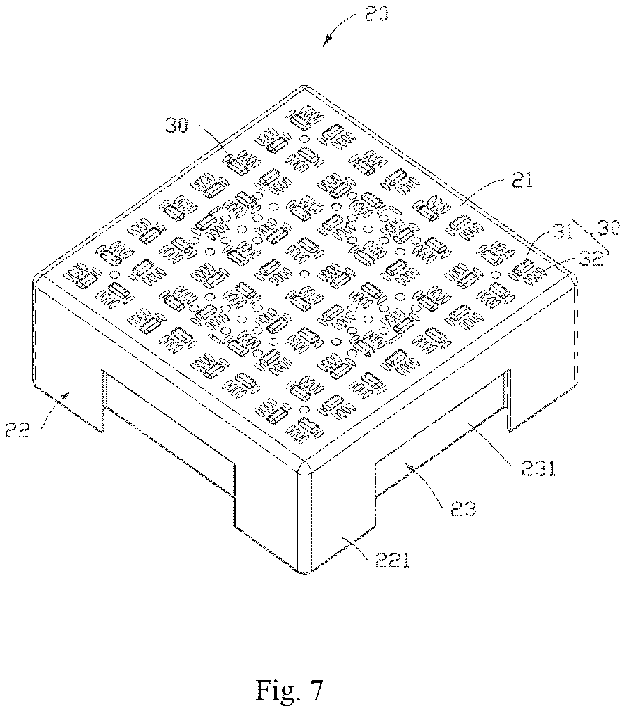

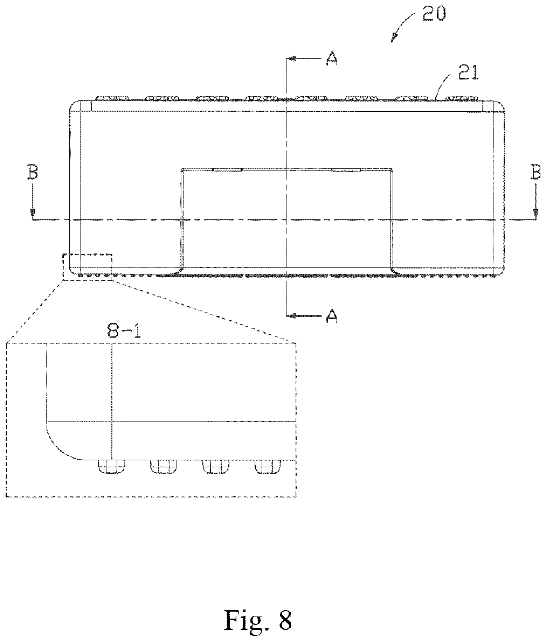

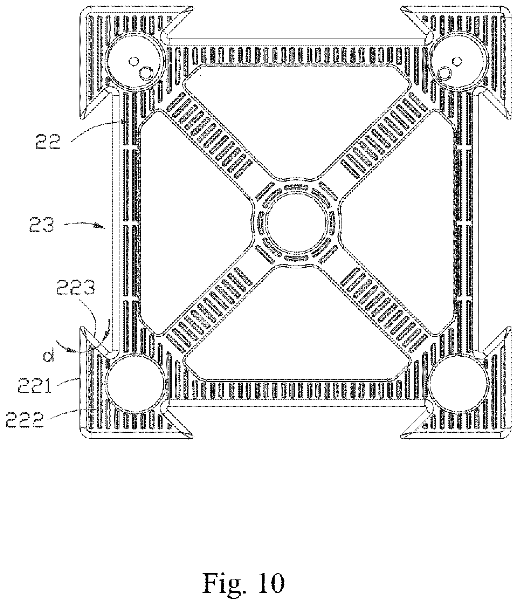

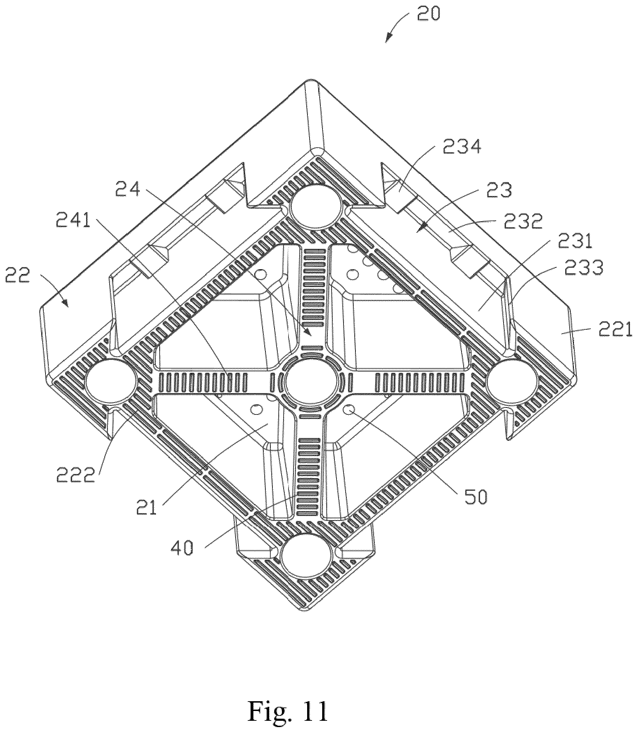

Referring to Figs. 7 to 11, the recessing brick 20 according to one embodiment of the present disclosure will be described in detail below. The recessing brick 20, which is a block, comprises a top portion 21 and four sidewalls 22, and the top portion 21 has a plurality of top anti-slip portion 30. Each sidewall 22 is coupled to the top portion 21, and each angle between each of the sidewalls 22 and the top portion 21 is about 90 degrees. In addition, each sidewall 22 has a mortise structure 23 which comprises a mortise front surface 231, an inner top surface 232, and two inner sides surface 233 (see Figs. 10 and 11 for details). The mortise front surface 231 is coupled to the inner top surface 232 and the two inner side surfaces 233, and the inner top surface 232 and the two inner side surfaces 233 are coupled to a sidewall surface 221 of the sidewall 22. Therefore, the mortise structure 23 is defined as a depression on the sidewall surface 221 of the recessing brick 20. The angle between the inner top surface 232 and the sidewall surface 221 is less than 90 degrees, and each angle between the sidewall surface 221 and each inner side surface 233 and is less than 90 degrees as well. As shown in Fig. 11, the mortise front surface 231 and the sidewall surface 221 are substantially parallel; as shown in Figs. 8 and 10, the inner side surface 233 is substantially perpendicular to the top 21. As shown in Fig. 11, the recessing brick 20 further comprises a support structure 24 arranged between the four sidewalls 22 and coupled thereto. More specifically, the support structure 24 is an "X"-shaped structure between the four sidewalls 22. A support structure bottom surface 241 of the support structure 24 and the sidewall bottom surface 222 of the sidewall 22 are substantially coplanar and coupled to each other, and the support structure 24 is extended upwardly from the support structure bottom surface 241 to be coupled to the top portion 21. The support structure bottom surface 241 of the support structure 24 and the sidewall bottom surface 222 of the sidewall 22 are in contact with the ground, and the support structure 24 and the sidewall 22 are both coupled to the top portion 21. Therefore, the load-bearing capacity of the top portion 21 (as well as the overall structural strength of the recessing brick 20) may be strengthened by the support structure 24.

As shown in Fig. 7, in one embodiment of the present disclosure, the top portion 21 of the recessing brick 20 has a plurality of top anti-slip portions 30, and each top anti-slip portion 30 comprises a first anti-slip structure 31 and a second anti-slip structure32. In one embodiment of the present disclosure, the first anti-slip structure 31 and the second anti-slip structure 32 are protrusions formed on up facing surface of the top portion 21. The number of the first anti-slip structure 31 is greater than that of the second anti-slip structure 32, and the volume of the first anti-slip structure 31 is larger than that of the second anti-slip structure 32. The top anti-slip portion 30 increases the friction between the recessing brick 20 and the object that it bears, for example, preventing pedestrians from slipping and vehicles from skidding.

As shown in Fig. 11, in one embodiment of the present disclosure, the recessing brick 20 comprises a plurality of drainage holes 50 provided on the top portion 21, and the drainage holes 50 penetrate the top portion 21 so liquids such as rainwater can pass through the top portion 21 and reach below the recessing brick 20. In another embodiment of the present invention, the bottom surface of the recessing brick 20 is formed by coupling of the sidewall bottom surfaces 222 of the four sidewalls 22 and the support structure bottom surface 241 of the support structure 24. In addition, the recessing brick 20 further comprises a plurality of bottom anti-slip portions 40 provided on the bottom surface thereof. More specifically, the sidewall bottom surfaces 222 and the support structure bottom surface 241 each comprises a plurality of bottom anti-slip portions 40. The bottom anti-slip portions 40 are protrusions on the bottom surface of the recessing brick 20 and configured to increase friction between the ground and recessing brick 20, so that the relative position of the recessing brick 20 and the ground can be more stable. In addition, since the bottom anti-slip portion 40 is a protruding structure, there is a gap between the recessing brick 20 and the ground (see the partial enlargement 8-1 in Fig. 8), hence beneficial for liquid drainage of the recessing brick 20.

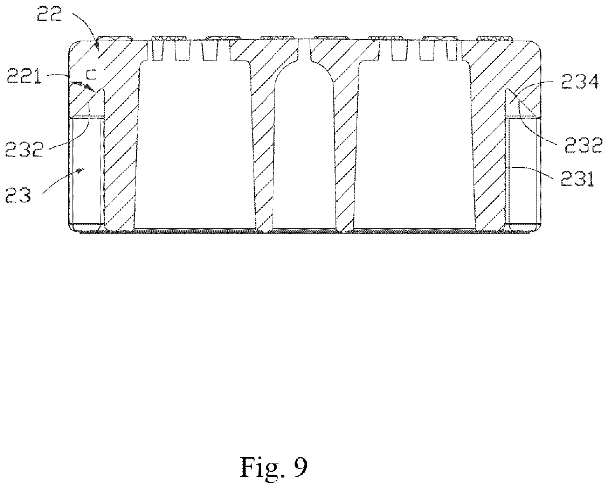

The protruding brick 10 shown in Figs. 2 to 6 and the recessing brick 20 shown in Figs. 7 to 11 can be assembled into the interlocking paving brick assembly 1 shown in Fig. 1. In one embodiment of the present disclosure, as shown in Figs. 3 and 4, the tenon structure 13 of the protruding brick 10 and the corresponding sidewall surface 121 collaboratively form an angle a and an angle b that are both less than 90 degrees. Particularly, in the illustrated embodiment, angle a is defined by the top surface 132 of the tenon structure 13 and the corresponding sidewall surface 121, while angle b is defined by the side surface 133 of the tenon structure 13 and the corresponding sidewall surface 121.) Referring to Figs. 9 and 10, where Fig. 9 and Fig. 10 are A-A and B-B cross-sectional views of Fig. 8, respectively. As shown in Fig. 9 and 10, the mortise structure 23 of the recessing brick 20 and the corresponding sidewall surface 221 collaboratively form an angle c and an angle d that are both less than 90 degree. Particularly, as shown in the instant example, angle c is defined by the inner top surface 232 of the mortise structure 23 and the corresponding sidewall surface 221, and the angle d is defined by the inner side surface 233 of the mortise structure 23 and the corresponding sidewall surface 221. The angle a of the protruding brick 10 is equal to the angle c of the recessing brick 20; the angle b of the protruding brick 10 is equal to the angle d of the recessing brick 20. Therefore, the protruding brick 10 and the recessing brick 20 can be closely integrated with each other when they are assembled together.

In one embodiment of the present disclosure, the material of the interlocking paving brick assembly 1 may comprise polyethylene (PE), calcium carbonate (CaCOs), polypropylene (PP), and paper fiber. The following are three examples of the raw material weight ratios: 1. 55-75% PE and 25-45% CaCOs; 2. 55-70% PE, 15-20% PP and 15-25% CaCOs; 3. 55-65% PE, 10-20% PP, 15-20% CaCO₃ and 3-8% paper fiber, among which the compression resistance of various ratios is from low to high according to listed order.

As shown in Fig. 4, in all embodiments of the present disclosure, the side surface 133 has a protrusion 136 at one end closer to the tenon structure bottom surface 134. When a protruding brick 10 and a recessing brick 20 are assembled into an interlocking paving brick assembly 1, the protrusion 136 is configured to facilitate tighter engagement therebetween. In all embodiments, the length L1 of the protrusion 136 is less than the length L2 of the side surface 133 (e.g., L1 is shown to be less than one-half of L2). Hence the assembly resistance and tightness are increased by the protrusion 136 after the tenon structure 13 is vertically overlapped with the mortise structure 23 by one-half of L2 upon the protruding brick 10 and the recessing brick 20 engaging with each other, and the protrusion 136 will not make assembly difficult as such. In another embodiment of the present disclosure, the distance between the upper ends of the two side surfaces 133 of the tenon structure 13 is less than the distance between the lower ends, so that a progressive resistance and tightness can be provided between the tenon structure 13 of the protruding brick 10 and the mortise structures 23 of the recessing bricks 20 upon coupling with each other. In another embodiment of the present disclosure, the same concept can also be applied to the inner sides 233 of the mortise structure 23 of the recessing brick 20, for example, the distance between the upper ends can be less than that between the lower ends of the two inner sides 233.

In one embodiment of the present disclosure, as shown in Figs. 2 and 3, the tenon structure 13 of the protruding brick 10 comprises at least one sub-mortise structure 135 arranged between the top surface 132 and the tenon front surface 131. The sub-mortise structure 135 is a depression on the top surface 132 of the tenon structure 13, and the depression extends laterally from the tenon front surface 131 toward the sidewall surface 121 to define the sub-mortise structure 135. As shown in Figs. 9 and 11, the mortise structure 23 of the recessing brick 20 comprises at least one sub-tenon structure 234 arranged between the mortise front surface 231 and the inner top surface 232. The sub-tenon structure 234 is a protrusion on the inner top surface 232 of the mortise structure 23, and the protrusion extends laterally from the mortise front surface 231 toward the sidewall surface 221 to define the sub-tenon structure 234. The shapes of the sub-mortise structure 135 and the sub-tenon structure 234 match each other. Therefore, the sub-mortise structure 135 can be fit to the sub-tenon structure 234 when the protruding brick 10 is fit to the recessing brick 20 by the tenon structure 13 and the mortise structure 23 thereof, respectively, to form the interlocking paving brick assembly 1 in Fig. 1, and the stability between the tenon structure 13 and the mortise structure 23 and the overall torsion resistance of the interlocking paving brick assembly 1 can be improved. It should be noted that the width of the sub-mortise structure 135 is less than that of the tenon structure 13; the width of the sub-tenon structure 234 is less than that of the mortise structure 23. In another embodiment of the present disclosure, each tenon structure 13 of the protruding brick 10 comprises a plurality of sub-mortise structures 135; each of the sub-mortise structures 23 of the recessing brick 20 comprises a plurality of the sub-tenon structures 234.

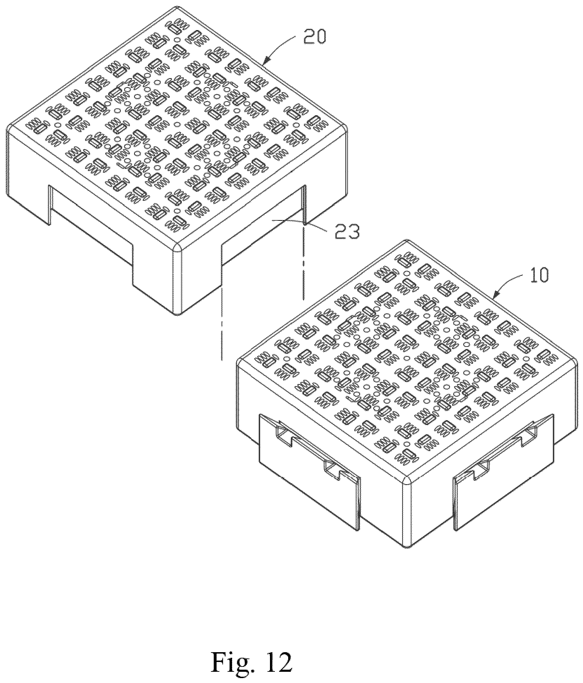

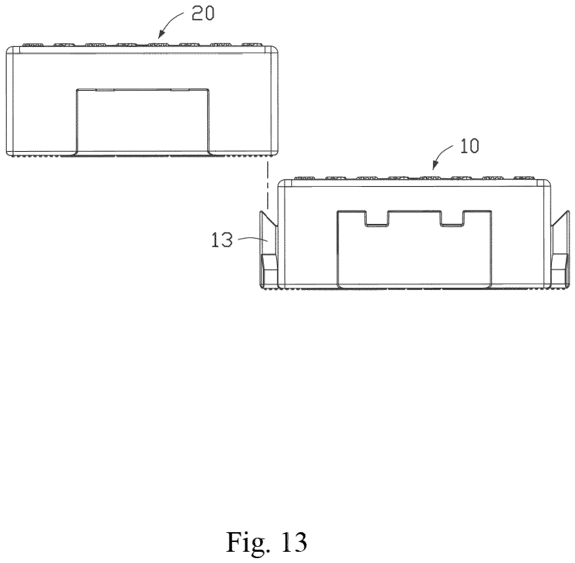

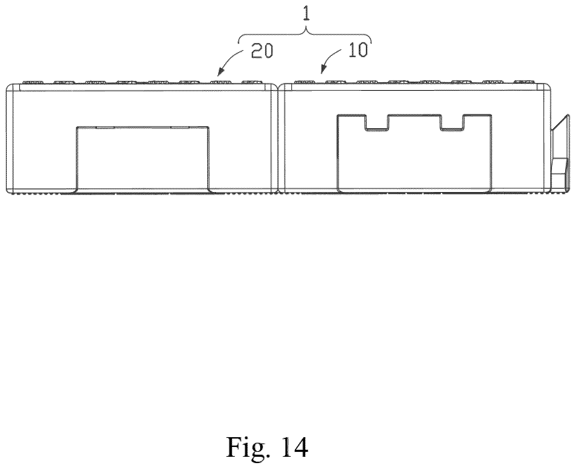

As shown in Figures 12 to 14, in one embodiment of the present disclosure, an assembly method of the interlocking paving brick assembly 1 is disclosed: in Fig. 12 and Fig. 13, vertically aligning the mortise structure 23 of the recessing brick 20 with the tenon structure 13 of the protruding brick 10; in Fig. 14, vertically clamping the recessing brick 20 to the protruding brick 10 from top to down until the top portion 21 of the recessing brick 20 is leveled with the top portion 11 of the protruding brick 10.

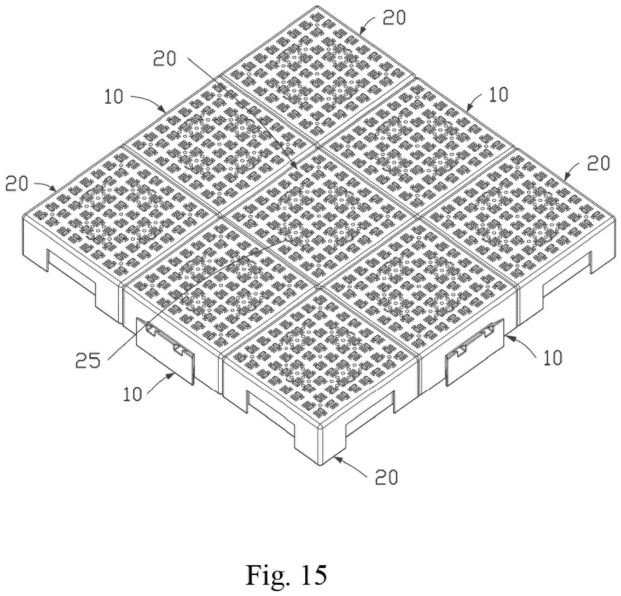

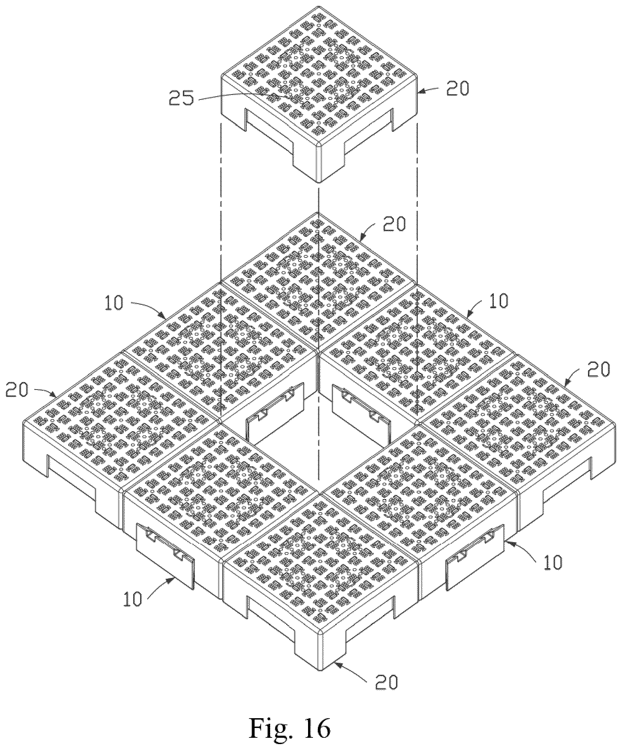

As shown in Fig. 15, in one embodiment of the present disclosure, a plurality of protruding brick 10 and a plurality of recessing brick 20 can be assembled together in an alternating manner according to the aforementioned assembly method, and each adjacent brick is tightly engaged to another and the top portions of the bricks are flush as such. If a daily maintenance or temporary repair of a damaged brick is required, the tight engagement and flush top portions of the bricks leaves no point of application. The recessing brick 20 further comprises at least one tool hole 25 through which a tool can pass. When the recessing brick 20 is to be removed from the multiple interlocking paving brick assemblies as shown in Fig. 16, one can apply upward force thereto through the tool in the tool hole 25.

The embodiments shown and described above are only examples. Many details are often found in this field of art thus many such details are neither shown nor described. Even though numerous characteristics and advantages of the present technology have been set forth in the foregoing description, together with details of the structure and function of the present disclosure, the disclosure is illustrative only, and changes may be made in the detail, especially in matters of shape, size, and arrangement of the parts within the principles of the present disclosure, up to and including the full extent established by the broad general meaning of the terms used in the claims. It will therefore be appreciated that the embodiments described above may be modified within the scope of the claims.

## Claims

1. An interlocking paving brick assembly (1) comprising:
a protruding brick (10) having a block shape, the protruding brick comprises a first top portion (11) and four first sidewalls (12), wherein each of the four first sidewalls is substantially perpendicular to the first top portion and comprises a first sidewall surface and a tenon structure (13);
wherein the tenon structure comprises a top surface (132), a tenon structure bottom surface (134) and a side surface (133) having a protrusion (136) at one end closer to the tenon structure bottom surface,
wherein the length of the protrusion (136) is less than the length of the side surface (133),
wherein the top surface of the tenon structure and the corresponding first sidewall surface define an angle a, and
wherein the side surface of the tenon structure and the corresponding first sidewall surface define an angle b;
a recessing brick (20) having a block shape, the recessing brick comprises a second top portion (21) and four second sidewalls (22), wherein each of the four second sidewalls is substantially perpendicular to the second top portion and comprises a second side wall surface and a mortise structure (23);
wherein the mortise structure comprises an inner top surface (232) and an inner side surface (233),
wherein the inner top surface of the mortise structure and the corresponding second sidewall surface define an angle c, and,
wherein the inner side surface of the mortise structure and the corresponding second sidewall surface define an angle d; and
wherein the tenon structure of the protruding brick and the mortise structure of the recessing brick are structural complementary to each other, whereby the protruding brick interlocks with the recessing brick upon coupling of the tenon structure and the mortise structure to form the interlocking paving brick assembly;
wherein the angle a and angle b of the protruding brick is equal to the angle c and angle d of the recessing brick, respectively; and
wherein the protrusion (136) is configured to facilitate tighter engagement between the protruding brick (10) and the recessing brick (20) when the protruding brick and the recessing brick are assembled to form the interlocking paving brick assembly.

2. The interlocking paving brick assembly (1) of claim 1, wherein the tenon structure (13) comprises a tenon front surface (131), and a sub-mortise structure (135) arranged between the top surface and the tenon front surface, wherein the sub-mortise structure is a depression on the top surface; wherein the mortise structure (23) comprises a mortise front surface, and a sub-tenon structure arranged between the mortise front surface and the inner top surface, wherein the sub-tenon structure is a protrusion on the inner top surface; and wherein the shape of the sub-mortise structure and the sub-tenon structure match to each other, whereby the sub-mortise structure fit to the sub-tenon structure when the protruding brick is fit to the recessing brick by the tenon structure and the mortise structure to form the interlocking paving brick assembly.

3. The interlocking paving brick assembly (1) of any preceding claim, wherein raw material weight ratio of the interlocking paving brick assembly is 55-75% PE and 25-45% CaCO₃.

4. The interlocking paving brick assembly (1) of any of claims 1 or 2, wherein raw material weight ratio of the interlocking paving brick assembly is 55-70% PE, 15-20% PP and 15-25% CaCO₃.

5. The interlocking paving brick assembly (1) of any of claims 1 or 2, wherein raw material weight ratio of the interlocking paving brick assembly is 55-65% PE, 10-20% PP, 15-20% CaCO₃ and 3-8% paper fiber.

6. The interlocking paving brick assembly (1) of any preceding claim, wherein the tenon structure (13) comprises a tenon front surface (131) and a tenon structure bottom surface (134) and the tenon front surface (131), the top surface (132), two side surfaces (133), and the tenon structure bottom surface define a protrusion that protrudes from the first sidewall surface of the first sidewall; wherein an angle between the top surface and the first sidewall surface, and between the side surface and the first sidewall surface, is less than 90 degrees; and wherein the tenon front surface is substantially parallel to the first sidewall surface, the two side surfaces are substantially perpendicular to the first top portion, and the tenon structure bottom surface is substantially coplanar with a first sidewall bottom surface of the first sidewall.

7. The interlocking paving brick assembly (1) of claim 6, wherein the protruding brick (10) further comprises a first support structure arranged between the four first sidewalls, and the first support structure is a "X"-shape structure; and wherein a first support structure bottom surface of the first support structure is substantially coplanar with the first sidewall bottom surface, and the first support structure is extended upwardly from the first support structure bottom surface to be coupled to the first top portion.

8. The interlocking paving brick assembly (1) of claim 6 or 7, wherein the protruding brick (10) further comprises a plurality of first bottom anti-slip portion which are protrusions on bottom surface of the protruding brick.

9. The interlocking paving brick assembly (1) of any preceding claim, wherein mortise structure (23) further comprises a mortise front surface (231), and the mortise front surface, the inner top surface and two inner side surfaces define a depression on a second sidewall surface of the second sidewall; wherein an angle between the inner top surface and the second sidewall surface, and between the inner side surfaces and the second sidewall surface, is less than 90 degrees; and wherein the mortise front surface is substantially parallel to the second sidewall surface, and the inner side surfaces are substantially perpendicular to the second top portion.

10. The interlocking paving brick assembly (1) of claim 9, wherein the recessing brick (20) further comprises a second support structure arranged between the four second sidewalls, and the second support structure is a "X"-shape structure; and wherein a second support structure bottom surface of the second support structure is substantially coplanar with the second sidewall bottom surface of the second sidewall, and the second support structure is extended upwardly from the second support structure bottom surface to be coupled to the second top portion.

11. The interlocking paving brick assembly (1) of claim 9 or 10, wherein the recessing brick (20) further comprises a plurality of second bottom anti-slip portion which are protrusions on bottom surface of the recessing brick.

12. The interlocking paving brick assembly (1) of any preceding claim, wherein the recessing brick (20) further comprises at least one tool hole (25) through which a tool can pass, whereby the recessing brick is to be removed from the interlocking paving brick assembly when upward force is applied by the tool in the tool hole.

## Patentansprüche

1. Ineinandergreifender Pflastersteinverbund (1), Folgendes umfassend:
einen vorstehenden Stein (10), der blockförmig ist, wobei der vorstehende Stein einen ersten oberen Abschnitt (11) und vier erste Seitenwände (12) umfasst, wobei jede der vier ersten Seitenwände im Wesentlichen senkrecht zum ersten oberen Abschnitt ist und eine erste Seitenwandfläche und eine Zapfenstruktur (13) umfasst;
wobei die Zapfenstruktur eine Deckfläche (132), eine Zapfenstrukturbodenfläche (134) und eine Seitenfläche (133) mit einem Vorsprung (136) an einem der Zapfenstrukturbodenfläche näher gelegenen Ende umfasst,
wobei die Länge des Vorsprungs (136) geringer ist als die Länge der Seitenfläche (133),
wobei die Deckfläche der Zapfenstruktur und die zugehörige erste Seitenwandfläche einen Winkel a definieren und
wobei die Seitenfläche der Zapfenstruktur und die zugehörige erste Seitenwandfläche einen Winkel b definieren;
einen ausgesparten Stein (20), der blockförmig ist, wobei der ausgesparte Stein einen zweiten oberen Abschnitt (21) und vier zweite Seitenwände (22) umfasst, wobei jede der vier zweiten Seitenwände im Wesentlichen senkrecht zum zweiten oberen Abschnitt ist und eine zweite Seitenwandfläche und eine Zapfenlochstruktur (23) umfasst;
wobei die Zapfenlochstruktur eine innere Deckfläche (232) und eine innere Seitenfläche (233) umfasst,
wobei die innere Deckfläche der Zapfenlochstruktur und die zugehörige zweite Seitenwandfläche einen Winkel c definieren und
wobei die innere Seitenfläche der Zapfenlochstruktur und die zugehörige zweite Seitenwandfläche einen Winkel d definieren und
wobei die Zapfenstruktur des vorstehenden Steins und die Zapfenlochstruktur des ausgesparten Steins strukturell zueinander passen, wobei der vorstehende Stein beim Koppeln der Zapfenstruktur und der Zapfenlochstruktur in den ausgesparten Stein eingreift, um den ineinandergreifenden Pflastersteinverbund auszubilden;
wobei Winkel a und Winkel b des vorstehenden Steins gleich Winkel c bzw. Winkel d des ausgesparten Steins sind und
wobei der Vorsprung (136) dazu ausgelegt ist, einen engeren Eingriff zwischen dem vorstehenden Stein (10) und dem ausgesparten Stein (20) zu ermöglichen, wenn der vorstehende Stein und der ausgesparte Stein montiert sind, um den ineinandergreifenden Pflastersteinverbund auszubilden.

2. Ineinandergreifender Pflastersteinverbund (1) nach Anspruch 1, wobei die Zapfenstruktur (13) eine Zapfenstirnfläche (131) umfasst und eine Unterzapfenlochstruktur (135) zwischen der Deckfläche und Zapfenstirnfläche angeordnet ist, wobei die Unterzapfenlochstruktur eine Vertiefung auf der Deckfläche ist; wobei die Zapfenlochstruktur (23) eine Zapfenlochstirnfläche umfasst und eine Unterzapfenstruktur zwischen der Zapfenlochstirnfläche und der inneren Deckfläche angeordnet ist, wobei die Unterzapfenstruktur ein Vorsprung an der inneren Deckfläche ist; und wobei die Form der Unterzapfenlochstruktur und der Unterzapfenstruktur zueinander passen, wobei die Unterzapfenlochstruktur durch die Zapfenstruktur und die Zapfenlochstruktur an der Unterzapfenstruktur montiert wird, wenn der vorstehende Stein in den ausgesparten Stein montiert wird, um den ineinandergreifenden Pflastersteinverbund auszubilden.

3. Ineinandergreifender Pflastersteinverbund (1) nach einem der vorstehenden Ansprüche, wobei das Rohmaterialgewichtsverhältnis des ineinandergreifenden Pflastersteinverbunds 55-75 % PE und 25-45 % CaCO₃ beträgt.

4. Ineinandergreifender Pflastersteinverbund (1) nach einem der Ansprüche 1 oder 2, wobei das Rohmaterialgewichtsverhältnis des ineinandergreifenden Pflastersteinverbunds 55-70 % PE, 15-20 % PP und 15-25 % CaCO₃ beträgt.

5. Ineinandergreifender Pflastersteinverbund (1) nach einem der Ansprüche 1 oder 2, wobei das Rohmaterialgewichtsverhältnis des ineinandergreifenden Pflastersteinverbunds 55-65 % PE, 10-20 % PP, 15-20 % CaCO₃ und 3-8 % Papierfaser beträgt.

6. Ineinandergreifender Pflastersteinverbund (1) nach einem der vorstehenden Ansprüche, wobei die Zapfenstruktur (13) eine Zapfenstirnfläche (131) und eine Zapfenstrukturbodenfläche (134) umfasst und die Zapfenstirnfläche (131), die Deckfläche (132), die zwei Seitenflächen (133) und die Zapfenstrukturbodenfläche einen Vorsprung definieren, der von der ersten Seitenwandfläche der ersten Seitenwand vorsteht; wobei ein Winkel zwischen der Deckfläche und der ersten Seitenwandfläche und zwischen der Seitenfläche und der ersten Seitenwandfläche weniger als 90 Grad beträgt und wobei die Zapfenstirnfläche im Wesentlichen parallel zur ersten Seitenfläche ist, die zwei Seitenflächen im Wesentlichen senkrecht zum ersten oberen Abschnitt sind und die Zapfenstrukturbodenfläche mit der ersten Seitenwandbodenfläche der ersten Seitenwand im Wesentlichen komplanar ist.

7. Ineinandergreifender Pflastersteinverbund (1) nach Anspruch 6, wobei der vorstehende Stein (10) ferner eine erste Stützstruktur umfasst, die zwischen den vier ersten Seitenwänden angeordnet ist, und wobei die erste Stützstruktur eine X-förmige Struktur ist und wobei eine erste Stützstrukturbodenfläche der ersten Stützstruktur mit der ersten Seitenwandbodenfläche im Wesentlichen komplanar ist und sich die erste Stützstruktur von der mit dem ersten oberen Abschnitt zu koppelnden ersten Stützstrukturbodenfläche aufwärts erstreckt.

8. Ineinandergreifender Pflastersteinverbund (1) nach Anspruch 6 oder 7, wobei der vorstehende Stein (10) ferner mehrere erste Anti-Rutsch-Bodenabschnitte umfasst, die Vorsprünge an der Bodenfläche des vorstehenden Steins sind.

9. Ineinandergreifender Pflastersteinverbund (1) nach einem der vorstehenden Ansprüche, wobei die Zapfenlochstruktur (23) ferner eine Zapfenlochstirnfläche (231) umfasst und die Zapfenlochstirnfläche, die innere Deckfläche und die zwei inneren Seitenflächen eine Vertiefung in einer zweiten Seitenwandfläche der zweiten Seitenwand definieren; wobei ein Winkel zwischen der inneren Deckfläche und der zweiten Seitenwandfläche und zwischen den inneren Seitenflächen und der zweiten Seitenwandfläche weniger als 90 Grad beträgt und wobei die Zapfenlochstirnfläche im Wesentlichen parallel zur zweiten Seitenwandfläche ist und die inneren Seitenflächen im Wesentlichen senkrecht zum zweiten oberen Abschnitt sind.

10. Ineinandergreifender Pflastersteinverbund (1) nach Anspruch 9, wobei der ausgesparte Stein (20) ferner eine zweite Stützstruktur umfasst, die zwischen den vier zweiten Seitenwänden angeordnet ist, und die zweite Stützstruktur eine X-förmige Struktur ist und wobei eine zweite Stützstrukturbodenfläche der zweiten Stützstruktur mit der zweiten Seitenwandbodenfläche der zweiten Seitenwand im Wesentlichen komplanar ist und sich die zweite Stützstruktur von der mit dem zweiten oberen Abschnitt zu koppelnden zweiten Stützstrukturbodenfläche aufwärts erstreckt.

11. Ineinandergreifender Pflastersteinverbund (1) nach Anspruch 9 oder 10, wobei der ausgesparte Stein (20) ferner mehrere zweite Anti-Rutsch-Bodenabschnitte umfasst, die Vorsprünge an der Bodenfläche des ausgesparten Steins sind.

12. Ineinandergreifender Pflastersteinverbund (1) nach einem der vorstehenden Ansprüche, wobei der ausgesparte Stein (20) ferner mindestens eine Werkzeugbohrung (25) umfasst, durch die ein Werkzeug verlaufen kann, wodurch der ausgesparte Stein aus dem ineinandergreifenden Pflastersteinverbund zu entnehmen ist, wenn durch das Werkzeug in der Werkzeugbohrung eine Aufwärtskraft aufgebracht wird.

## Revendications

1. Assemblage de briques de pavage à emboîtement (1) comprenant :
une brique en saillie (10) ayant une forme de bloc, la brique en saillie comprend une première partie supérieure (11) et quatre premières parois latérales (12), chacune des quatre premières parois latérales étant sensiblement perpendiculaire à la première partie supérieure et comprenant une première surface de paroi latérale et une structure à tenon (13) ;
la structure à tenon comprenant une surface supérieure (132), une surface inférieure de structure à tenon (134) et une surface latérale (133) ayant une saillie (136) au niveau d'une extrémité plus proche de la surface inférieure de structure à tenon,
la longueur de la saillie (136) étant inférieure à la longueur de la surface latérale (133),
la surface supérieure de la structure à tenon et la première surface de paroi latérale correspondante formant un angle a, et
la surface latérale de la structure à tenon et la première surface de paroi latérale correspondante formant un angle b ;
une brique en retrait (20) ayant une forme de bloc, la brique en retrait comprend une seconde partie supérieure (21) et quatre secondes parois latérales (22), chacune des quatre secondes parois latérales étant sensiblement perpendiculaire à la seconde partie supérieure et comprenant une seconde surface de paroi latérale et une structure à mortaise (23) ;
la structure à mortaise comprenant une surface supérieure intérieure (232) et une surface latérale intérieure (233),
la surface supérieure intérieure de la structure à mortaise et la seconde surface de paroi latérale correspondante définissant un angle c, et,
la surface latérale intérieure de la structure à mortaise et la seconde surface de paroi latérale correspondante définissant un angle d ; et
la structure à tenon de la brique en saillie et la structure à mortaise de la brique en retrait étant structurellement complémentaires l'une de l'autre, moyennant quoi la brique en saillie s'emboîte avec la brique en retrait lors de l'accouplement de la structure à tenon et de la structure à mortaise pour former l'assemblage de briques de pavage à emboîtement ;
l'angle a et l'angle b de la brique en saillie étant respectivement égaux à l'angle c et à l'angle d de la brique en retrait ; et
la saillie (136) étant conçue pour faciliter une mise en prise plus serrée entre la brique en saillie (10) et la brique en retrait (20) lorsque la brique en saillie et la brique en retrait sont assemblées pour former l'assemblage de briques de pavage à emboîtement.

2. Assemblage de briques de pavage à emboîtement (1) selon la revendication 1, la structure à tenon (13) comprenant une surface avant de tenon (131), et une structure à sous-mortaise (135) disposée entre la surface supérieure et la surface avant de tenon, la structure à sous-mortaise étant une dépression sur la surface supérieure ; la structure à mortaise (23) comprenant une surface avant de mortaise, et une structure à sous-tenon disposée entre la surface avant de mortaise et la surface supérieure intérieure, la structure à sous-tenon étant une saillie sur la surface supérieure intérieure ; et la forme de la structure à sous-mortaise et de la structure à sous-tenon correspondant l'une à l'autre, moyennant quoi la structure à sous-mortaise s'ajuste à la structure à sous-tenon lorsque la brique en saillie est ajustée à la brique en retrait par la structure à tenon et la structure à mortaise pour former l'assemblage de briques de pavage à emboîtement.

3. Assemblage de briques de pavage à emboîtement (1) selon l'une quelconque des revendications précédentes, le rapport pondéral des matières premières de l'assemblage de briques de pavage à emboîtement étant 55-75 % de PE et 25-45 % de CaCO₃.

4. Assemblage de briques de pavage à emboîtement (1) selon l'une quelconque des revendications 1 ou 2, le rapport pondéral des matières premières de l'assemblage de briques de pavage à emboîtement étant 55-70 % de PE, 15-20 % de PP et 15-25 % de CaCO₃.

5. Assemblage de briques de pavage à emboîtement (1) selon l'une quelconque des revendications 1 ou 2, le rapport pondéral des matières premières de l'assemblage de briques de pavage à emboîtement étant 55-65 % de PE, 10-20 % de PP, 15-20 % de CaCO₃ et 3-8 % de fibre de papier.

6. Assemblage de briques de pavage à emboîtement (1) selon l'une quelconque des revendications précédentes, la structure à tenon (13) comprenant une surface avant de tenon (131) et une surface inférieure de structure à tenon (134) et la surface avant de tenon (131), la surface supérieure (132), deux surfaces latérales (133), et la surface inférieure de structure à tenon définissent une saillie qui fait saillie de la première surface de paroi latérale de la première paroi latérale ; un angle entre la surface supérieure et la première surface de paroi latérale, et entre la surface latérale et la première surface de paroi latérale, étant inférieur à 90 degrés ; et la surface avant de tenon étant sensiblement parallèle à la première surface de paroi latérale, les deux surfaces latérales étant sensiblement perpendiculaires à la première partie supérieure, et la surface inférieure de structure à tenon étant sensiblement coplanaire avec une première surface de paroi latérale inférieure de la première paroi latérale.

7. Assemblage de briques de pavage à emboîtement (1) selon la revendication 6, la brique en saillie (10) comprenant en outre une première structure de support disposée entre les quatre premières parois latérales, et la première structure de support étant une structure en forme de « X » ; et une première surface inférieure de structure de support de la première structure de support étant sensiblement coplanaire avec la première surface inférieure de paroi latérale, et la première structure de support étant étendue vers le haut à partir de la première surface inférieure de structure de support pour être accouplée à la première partie supérieure.

8. Assemblage de briques de pavage à emboîtement (1) selon la revendication 6 ou 7, la brique en saillie (10) comprenant en outre une pluralité de premières parties antidérapantes inférieures qui sont des saillies sur une surface inférieure de la brique en saillie.

9. Assemblage de briques de pavage à emboîtement (1) selon l'une quelconque des revendications précédentes, la structure à mortaise (23) comprenant en outre une surface avant de mortaise (231), et la surface avant de mortaise, la surface supérieure intérieure et les deux surfaces latérales intérieures définissant une dépression sur une seconde surface de paroi latérale de la seconde paroi latérale ; un angle entre la surface supérieure intérieure et la seconde surface de paroi latérale, et entre les surfaces latérales intérieures et la seconde surface de paroi latérale, étant inférieur à 90 degrés ; et la surface avant de mortaise étant sensiblement parallèle à la seconde surface latérale, et les surfaces latérales intérieures étant sensiblement perpendiculaires à la seconde partie supérieure.

10. Assemblage de briques de pavage à emboîtement (1) selon la revendication 9, la brique en retrait (20) comprenant en outre une seconde structure de support disposée entre les quatre secondes parois latérales, et la seconde structure de support étant une structure en forme de « X » ; et une seconde surface inférieure de structure de support de la seconde structure de support étant sensiblement coplanaire avec la seconde surface inférieure de paroi latérale de la seconde paroi latérale, et la seconde structure de support étant étendue vers le haut à partir de la seconde surface inférieure de structure de support pour être accouplée à la seconde partie supérieure.

11. Assemblage de briques de pavage à emboîtement (1) selon la revendication 9 ou 10, la brique en retrait (20) comprenant en outre une pluralité de secondes parties antidérapantes inférieures qui sont des saillies sur la surface inférieure de la brique en retrait.

12. Assemblage de briques de pavage à emboîtement (1) selon l'une quelconque des revendications précédentes, la brique en retrait (20) comprenant en outre au moins un trou d'outil (25) à travers lequel un outil peut passer, moyennant quoi la brique en retrait doit être retirée de l'assemblage de briques de pavage à emboîtement lorsqu'une force ascendante est appliquée par l'outil dans le trou d'outil.
